# EUROPÄISCHE PATENTANMELDUNG

(11) **EP 4 755 816 A1**
(43) Veröffentlichungstag der Anmeldung: **10.06.2026**
(21) Anmeldenummer: 26157884.3
(22) Anmeldetag: 13.10.2023
(51) Int. Cl.: B65D 65/40, B65D 75/00

(54) **RECYCLEFÄHIGER STAND UP POUCH AUF BASIS VON POLYPROPYLEN**

(30) Priorität: 20.12.2022 DE 102022134007
(62) Teilanmeldung aus: 23790274.7
(71) Anmelder: Capri Sun AG, 6300 Zug (CH)
(72) Erfinder: WEENING, Roland, 6300 Zug (CH)
(74) Vertreter: Grünecker Patent- und Rechtsanwälte PartG mbB

(57) **Zusammenfassung**

Recyclefähiger Stand Up Pouch (1) für Getränke
auf Basis von Polypropylen,
mit einer Vorderseite (2), einer Rückseite (3) und einem Boden (4),
wobei die Vorderseite (2), die Rückseite (3) und der Boden (4) jeweils eine transparente Außenlage (5, 10) und eine Siegellage (9, 11) aufweisen,
dadurch gekennzeichnet,
dass die Siegellage (9, 11) gegenüber der Außenlage (5, 10) eine größere Dicke aufweist.

## Beschreibung

Die Erfindung betrifft einen recyclefähigen Stand Up Pouch für Getränke mit einer Vorderseite, einer Rückseite und einem Boden, wobei die Vorderseite, die Rückseite und der Boden jeweils eine transparente Außenlage und eine Siegellage aufweisen.

Stand Up Pouches oder auch Standbodenbeutel sind flexible Verpackungen, die auf ihrem Boden stehen können und werden in der Regel für Pulver, Pasten oder trinkfertige Getränke verwendet. Der untere Teil eines Standbeutels ist mit einer Seitenfalte versehen, um die Standfähigkeit des Pouches zu realisieren.

Doyen hat 1963 in der Patentschrift DE 1 281 140 einen Beutel mit Boden aus thermoplastischem Kunststoff offenbart, bestehend aus zwei durch ein W-förmig nach innen gefaltetes Bodenstück verbundenen, an ihren Rändern entlang der Beutelhöhe durch Längsschweißnähte miteinander verschweißten Folienlagen.

Stand Up Pouches (SUP) wurden erstmals vor etwa 60 Jahren hergestellt. In den frühen Designs wurde ein Laminat aus einer Schicht Polyethylenterephthalat (PET) und einer Schicht Polyethylen (PE) verwendet. Dazwischen konnte optional eine Aluminiumfolienschicht angeordnet sein. Diese Art von Design wird immer noch kommerziell genutzt, wobei eine typische Struktur eine dünne Schicht etwa 12 µm aus PET, eine Schicht aus Aluminiumfolie mit ca. 8 µm Dicke und eine dickere Schicht, etwa 80 µm dick, aus Polyethylen aufweist. Ein Problem bei diesem SUP-Design ist, dass die Beutel aufgrund der unterschiedlichen Konstruktionsmaterialien sehr schwierig oder gar nicht zu recyceln sind.

Heute bekannte Stand Up Pouches werden in der Praxis als Massenartikel eingesetzt, wobei der typische Aufbau solcher Folienverpackungsbeutel beispielsweise auch aus EP 2 032 454 B1 sowie EP 2 364 848 B1 bekannt ist. Häufig ist als Material für die Beutelwand ein Kaschierverbund als Beutelfolie mit einer Innenfolie aus Polyethylen (PE) und eine Außenfolie auf der Basis von Polyethylenterephthalat (PET) oder biaxial orientierten Polypropylen (BO-PP) vorgesehen, wobei eine Druckschicht zu einem solchen Kaschierverbund vor dem Verkleben der Innenfolie mit der Außenfolie innenliegend an der Kontaktfläche entweder auf die Außenfolie oder die Innenfolie aufgebracht wird und dann durch die transparente Außenfolie sichtbar ist.

Derartige herkömmliche Folienverpackungsbeutel zeichnen sich durch ein besonders hochwertiges Erscheinungsbild und gute Funktionseigenschaften aus. Allerdings ist aufgrund der Kaschierung der unterschiedlichen Polymermaterialien ein sortenreines Kunststoff-Recycling nicht möglich, weshalb entsprechende Folienverpackungsbeutel als Einweg-Artikel nach ihrer Benutzung in der Regel deponiert oder bestenfalls verbrannt werden, wobei zumindest noch eine thermische Verwertung möglich ist.

Gleichzeitig kann die Art und Weise, wie Kunststoff und damit auch Verpackungsfolien derzeit produziert und entsorgt werden, optimiert werden. Die Europäische Union will im Rahmen ihres "Green Deals" die Deponierung von Kunststoffmüll reduzieren. Bis 2030 sollen 55 % des Verpackungsmülls aus Kunststoff recycelt werden.

Um die Herausforderungen des Recyclings bewältigen zu können, muss das Design von Verpackungen zunehmend nachhaltig gestaltet werden. Dies kann beispielsweise durch die Umsetzung und Implementierung von mehr Monomaterialkonstruktionen erfolgen. Hierbei liegt die Herausforderung im Erreichen der ganz unterschiedlichen Eigenschaften einer Verpackung mit nur einer recycelbaren Monomaterialkonstruktion, die zuvor durch die Kombination verschiedener Kunststoffschichten mit unterschiedlicher Materialbasis erzielt wurde.

Es hat sich gezeigt, dass biaxial orientierte Polypropylenfolien (BOPP) und monoaxial orientierte Polyethylenfolien (MDO-PE) und gegossene Polypropylenfolien eine gute Steifigkeit und Zähigkeit für die Verwendung von Stand Up Pouches bieten und dabei dünn ausgebildet werden können.

Die WO 2021/156898 offenbart einen Standbeutel, hergestellt aus einer biaxial orientierten Polypropylen (BOPP)-Folie. Die BOPP-Folie umfasst mindestens eine Kernschicht aus einem Material auf Polypropylenbasis, die eine Außenfläche und eine Innenfläche aufweist; eine innere Zwischenschicht, die an die Innenfläche der Kernschicht angrenzt und aus einem Material auf Polypropylenbasis oder aus einem Material auf Polyethylenbasis besteht; eine innere Hautschicht, die an die innere Zwischenschicht angrenzt und aus einem Material auf Polypropylenbasis oder aus einem Material auf Polyethylenbasis besteht und eine äußere Hautschicht, die mit der Außenfläche der Kernschicht korrespondiert.

Gleichzeitig können nicht die gleichen mechanischen Eigenschaften einer Mehrmaterialkonstruktion erreicht werden, wodurch der Gestaltung und des Aufbaus des Stand Up Pouches neue Herausforderungen entstehen, die die Formbeständigkeit und das Standverhalten des Stand Up Pouches betreffen. So ist es anspruchsvoll aufgrund der veränderten Materialeigenschaften exakt die bekannte und charakteristische Beutelform zu erzielen.

Zudem werden handelsübliche Stand Up Pouches für Getränke bei Temperaturen von über 85 °C abgefüllt und vakuumdicht verschlossen. Eine Monomaterialkonstruktion des Beutels muss auch unter den Bedingungen einer Heißabfüllung die Form des Beutels und die Ausführung der verschließenden Siegelung gewährleisten können.

Aufgabe der vorliegenden Erfindung ist es, einen recyclefähigen Stand Up Pouch bereitzustellen, der als Monomaterialkonstruktion ausgeführt ist und die bekannte, typische Form eines Stand Up Pouches gewährleistet. Zudem soll der Stand Up Pouch den Anforderungen des Plastikpakts 2025 genügen und voll recycelbar sein. Der Stand Up Pouch soll den Beutelinhalt vor dem Verderben schützen, eine lange und geschmackvolle Haltbarkeit gewährleisten und dabei eine hohe Barriere gegen den Durchtritt von Sauerstoff und Wasserdampf aufweisen. Der Stand Up Pouch soll siegelbar ausgeführt und soll auch zum Heißabfüllen von Getränken geeignet sein. Die flexible Beutelverpackung soll gesundheitlich unbedenklich und ökologisch nachhaltig sein. Weiterhin soll der Stand Up Pouch eine angenehme Haptik aufweisen.

Diese Aufgabe wird erfindungsgemäß durch einen recyclefähigen Stand Up Pouch, einem Verfahren und einer Verwendung gemäß den nebengeordneten Hauptansprüchen gewährleistet. Bevorzugte Varianten sind den Unteransprüchen, der Beschreibung, dem Ausführungsbeispiel und den Zeichnungen zu entnehmen.

Erfindungsgemäß weist die Siegellage gegenüber der Außenlage eine größere Dicke auf.

Die Außenlage bildet die Außenhaut des Stand Up Pouches und ist transparent ausgeführt, um das im Konterdruck aufgebrachte Druckbild zu offenbaren und dabei auch zu schützen.

Vorteilhafterweise ist die Außenlage aus einem Biaxial-orientiertem-Polypropylen (BOPP) ausgebildet, wobei das BOPP um mehr als den Faktor 2,0, vorzugsweise um mehr als den Faktor 3,0, insbesondere um mehr als den Faktor 4,0 verstreckt ausgebildet ist und/oder weniger als um den Faktor 7,0, vorzugsweise um weniger als den Faktor 6,5, insbesondere um weniger als den Faktor 6,0 verstreckt ausgebildet ist. Die Vorteile der Außenlage hinsichtlich guter Steifigkeit und guter Zähigkeit werden somit ideal ausgebildet, wodurch ein rapportgenaues Druckbild, auch auf einer besonders dünnen Außenlage aufgebracht werden kann.

In einer Ausführungsform ist vorgesehen, dass die Siegellage gegenüber der Außenlage um einen Faktor von 2 bis 4 oder um einen Faktor von 2,5 bis 3,5 dicker ausgebildet ist. Hiermit wird bei möglichst geringem Materialeinsatz ein zuverlässiges Siegeln bei gleichzeitig ausreichender Steifigkeit des Pouches erreicht.

Es kann vorgesehen sein, dass die Außenlage aus BOPP ausgebildet ist und dass das BOPP um einen Faktor von mehr als 1,1 und weniger als 2, insbesondere mehr als 1,2 und weniger als 1,8 verstreckt ausgebildet ist. hiermit wird bei hoher Flexibilität und gleichzeitig gewährleisteter Stabilität der Materialeinsatz reduziert.

In einer Ausführungsform ist vorgesehen, dass die Vorderseite und/oder die Rückseite und/oder der Boden mindestens eine Funktionslage aufweist, die zwischen der Außenlage und der Siegellage angeordnet ist, wobei die Funktionslage metallisiertes BOPP umfasst und wobei das metallisierte BOPP um einen Faktor von mehr als 1,1 und weniger als 2, insbesondere mehr als 1,2 und weniger als 1,8 verstreckt ausgebildet ist. Hiermit werden Anforderungen hinsichtlich Dichtheit und/oder Lichtundurchlässigkeit bei gleichzeitig niedrigem Materialeinsatz erreicht.

Es kann ferner vorgesehen sein, dass die Siegellage aus Cast Polypropylen (CPP) ausgebildet ist und das das CPP um einen Faktor von mehr als 3 und weniger als 8, insbesondere von mehr als 4 und weniger als 7 verstreckt ausgebildet ist. Reduzierter Materialeinsatz bei gleichzeitig gutem Siegelergebnis werden hiermit gewährleistet.

Idealerweise beträgt die Dicke der Außenlage mehr als 5 µm, vorzugsweise mehr als 10 µm, insbesondere mehr als 15 µm und/oder weniger als 45 µm, vorzugsweise weniger als 40 µm, insbesondere weniger als 35 µm. Die Außenlage ist somit so dünn wie möglich ausgebildet und gewährleistet gleichzeitig ausreichend Stabilität, wodurch die typische Stand Up Pouch-Form erzielt werden kann.

Idealerweise ist die Außenlage mehrschichtig ausgebildet, wobei die Außenlage mehr als zwei Schichten, vorzugsweise mehr als drei Schichten, insbesondere mehr als vier Schichten aufweist.

Beispielsweise weist die Außenlage einen Anteil von Polypropylen von mehr als 92,5 Gew.-%, vorzugsweise von mehr als 95 Gew.-%, insbesondere von mehr als 97,5 Gew.-% auf. Dieser enorm hohe Anteil an Polypropylen realisiert die Ausführung als Monomaterialkonstruktion des Stand Up Pouchs und begründet dessen Recycelfähigkeit.

Die Innenseite des Stand Up Pouches wird von einer Siegellage gebildet.

Bei einer besonders vorteilhaften Variante der Erfindung ist die Siegellage aus einer mehrschichtigen Cast-Polypropylenlage gebildet. Die Siegellage eignet sich besonders vorteilhaft für einen Siegelprozess.

Idealerweise beträgt die Dicke der Siegellage mehr als 45 µm, vorzugsweise mehr als 60 µm, insbesondere mehr als 75 µm und/oder weniger als 125 µm, vorzugsweise weniger als 105 µm, insbesondere weniger als 85 µm. Die Siegellage ist somit möglichst dünn ausgebildet und gewährleistet gleichzeitig die Siegelfähigkeit absolut dichter Siegelnähte.

Idealerweise ist die Siegellage mehrschichtig ausgebildet, wobei die Siegellage mehr als zwei Schichten, vorzugsweise mehr als drei Schichten, insbesondere mehr als vier Schichten aufweist.

Beispielsweise weist die Siegellage einen Anteil von Polypropylen von mehr als 92,5 Gew.-%, vorzugsweise von mehr als 95 Gew.-%, insbesondere von mehr als 97,5 Gew.-% auf. Dieser enorm hohe Anteil an Polypropylen realisiert die Ausführung als Monomaterialkonstruktion des Stand Up Pouchs und begründet dessen Recycelfähigkeit.

Die Außenlage und die Siegellage sind vorzugsweise mit einer Klebeschicht verbunden und werden zu rechteckigen Vorder- und Rückseiten konfektioniert. Der Boden des Stand Up Pouches kann prinzipiell den gleichen Aufbau haben. Bei einer günstigen Variante sind die Dicken der Außenlage und der Siegellage des Bodens etwas dünner ausgebildet. Die Vorderseite, die Rückseite und der Boden des Stand Up Pouches sind durch eine Siegelstruktur verbunden. Dabei werden die rechteckigen Vorder- und Rückseite übereinandergelegt und dazwischen ein w-förmig gefalteter Boden eingelegt.

Bei einer besonders günstigen Variante der Erfindung ist die Siegellage gegenüber der Außenlage um mehr als den Faktor 2,00, vorzugsweise mehr als den Faktor 2,25, insbesondere um mehr als den Faktor 2,50 dicker ausgebildet. Dadurch wird die eine vorteilhafte Siegelfähigkeit des als Monomaterialkonstruktion ausgeführten Stand Up Pouches erzielt.

Idealerweise ist die Siegellage gegenüber der Außenlage um weniger als den Faktor 6,50, vorzugsweise um weniger als den Faktor 6,25, insbesondere um weniger als den Faktor 6,00 dicker ausgebildet. Eine zu dicke Siegellage im Vergleich zur Außenlage könnte die Siegeleigenschaften ungünstig beeinflussen. Heißsiegeln ist die übliche Methode zur Herstellung von Nähten bei flexiblen Stand Up Pouches. Zweck des Siegelns ist das absolut dichte, auch feste Zusammenführen von siegelfähigen Materialien. Dicht bedeutet insbesondere die Undurchlässigkeit für mikrobiologische Kontaminationen sowie das Eindringen von Sauerstoff und von Wasserdampf, die bekanntlich zum Verderben von Lebensmitteln und hygroskopischen Füllgütern in einem Stand Up Pouch führen können. Die besondere Dicke und Ausführung der Cast-Polypropylen-Siegellage, sowie der Siegelprozess selbst, erzielen die erforderliche, absolute Dichtheit des Stand Up Pouches.

Beim Heißsiegeln werden zwei beheizte Balken verwendet, die Druck auf die zu versiegelnden Materialien ausüben und gleichzeitig Wärme an die Schnittstelle leiten, wodurch die Materialien schmelzen und eine Verbindung ausbilden. Der Druck gewährleistet einen guten Kontakt zwischen den Materialien und unterstützt die Durchdringung der geschmolzenen zähflüssigen Materialien an der Grenzfläche, die nach dem Abkühlen dauerhaft und dicht verbunden sind. Unter Siegelbarkeit wird der erfolgreiche und zeiteffiziente Vorgang des Verbindens der Vorderseite, der Rückseite und des Bodens zu einem Stand Up Pouch verstanden.

Bei einer äußerst vorteilhaften Variante der Erfindung weist die Vorderseite und/oder die Rückseite und/oder der Boden mindestens eine Funktionslage auf, die zwischen der Außenlage und der Siegellage angeordnet ist. Vorzugsweise ist die Funktionslage zwischen der Außenlage und der Siegellage eingeklebt. Die Funktionslage ist als ideale Barriere gegen Sauerstoff und Wasserdampf ausgeführt. Gleichzeitig bietet sie zusätzlichen Schutz des Pouches gegen Durchstoß.

Idealerweise weist die Funktionslage eine Dicke von weniger als 25 µm, vorzugsweise von weniger als 20 µm, insbesondere von weniger als 15 µm auf und/oder von mehr als 6 µm, vorzugsweise von mehr als 9 µm, insbesondere von mehr als 12 µm auf.

Der erfindungsgemäße Stand Up Pouch offenbart eine durchdachte Monomaterialkonstruktion auf Basis von Polypropylen. Dabei weist der Stand Up Pouch idealerweise einen Anteil von Polypropylen von mehr als 92,5 Gew.-%, vorzugsweise von mehr als 95 Gew.-%, insbesondere von mehr als 97,5 Gew.-% auf. Diese hervorragende Monomaterialkonstruktion auf Basis von Polypropylen begründet eine vorteilhafte Recycelfähigkeit und entspricht somit den Vorgaben des "Green Deal" der EU. Der erfindungsgemäße Stand Up Pouch mit seinen Dickenverhältnis von Siegellage zur Außenlage realisiert ganz unterschiedliche Merkmale, die zuvor nur durch eine Materialkombination erzielt werden konnte und ist gleichzeitig, insbesondere durch seine Recycelfähigkeit, besonders nachhaltig.

Idealerweise weist die Funktionslage eine Barriereschicht und/oder eine metallisierte Schicht und/oder eine Metallschicht und/oder mindestens eine BOPP-Schicht auf.

Bei einer günstigen Variante ist die Funktionslage als BOPP-Lage ausgeführt. Auf die BOPP-Lage ist eine hauchdünne Aluminiumschicht aufgedampft ist. Gleichzeitig ist die Lage für eine Klebelamination präpariert. Diese Lage bietet eine außergewöhnliche Barriere für Sauerstoff, Geschmacks- und Aromastoffe und hat eine ausgezeichnete Wasserdampfbarriere.

Bei einer vorteilhaften Variante der Erfindung ist die BOPP-Lage bedampft, vorzugsweise vakuumbedampft. Dabei wird vorzugsweise eine Metallschicht, insbesondere einer Aluminium und/oder einer Aluminiumoxidschicht aufgedampft. Die Dicke der metallisierten Schicht beträgt mehr als 10 nm, vorzugsweise mehr als 15 nm, insbesondere mehr als 20 nm und/oder weniger als 60 nm, vorzugsweise weniger als 50 nm, insbesondere weniger als 40 nm. Beispielsweise weist die Funktionslage einen Anteil von Polypropylen von mehr als 92,5 Gew.-%, vorzugsweise von mehr als 95 Gew.-%, insbesondere von mehr als 97,5 Gew.-% auf. Dieser enorm hohe Anteil an Polypropylen realisiert die Ausführung als Monomaterialkonstruktion des Stand Up Pouchs und begründet dessen Recycelfähigkeit.

Idealerweise trägt die metallisierte Schicht zu einer günstigen Reflexion des UV-Lichts bei, das von außen auf den Stand Up Pouch trifft.

Bei einer alternativen Variante ist die Funktionslage als alternative Barriereschicht ausgebildet. Die Barriereschicht wird vorzugsweise durch plasmagestützte chemische Gasphasenabscheidung zwischen Siegellage und Außenlage aufgebracht.

Dabei kann die abgeschiedene Barriereschicht vorzugsweise aus einem Siliciumoxid gebildet sein. Alternativ oder zusätzlich kann die Barriereschicht aus einer amorphen Kohlenstoffschicht ausgebildet sein. Darüber hinaus könnte die Barriereschicht aus einer keramischen Beschichtung und/oder einem Aluminiumoxid ausgeführt sein.

Vorzugsweise beträgt die Dicke der alternativen Barriereschicht 2 bis 8 nm.

Bei einer weiteren alternativen Variante der Erfindung kann die Barriereschicht als Ethylenvinylalkohol- und/oder Polyvinylalkoholschicht ausgeführt sein.

Bei einer ganz anderen Alternative der Erfindung kann die Barriereschicht in Form einer aufgedruckten Primerschicht ausgebildet sein. Diese kann beispielsweise aus einer Ethylenvinylalkohl- und/oder einer Polyvinylalkoholschicht und/oder einer Carboxylgruppe enthaltendem Polymer ausgeführt sein. Hierbei kann die Barriereschicht entweder auf der Innenseite oder der Außenseite der Außenlage oder auf der Außenseite der Siegellage aufgebracht werden.

Vorzugsweise weist die Vorderseite einen Einstecksystem zum Einbringen eines Trinkhalms auf.

Der Stand Up Pouch für Getränke umfasst einen Einstecksystem zum Einbringen eines Trinkhalms. Der Trinkhalm umfasst ein rohrförmiges Halmelement, das eine Halmwandung, einen in den Stand Up Pouch zu platzierenden Einlass und einen außerhalb des Stand Up Pouches zu platzierenden Auslass umfasst.

Das Halmelement kann mit einem Spritzgussverfahren hergestellt werden. Ein Querschnitt des Halmelements kann rund, oval, dreieckig oder viereckig ausgebildet sein.

Idealerweise ist eine Verpackungshülle für das Halmelements, das den hygienischen Verschluss des Halmelements bis zum Trinkgenuss gewährleistet, aus einer dünnen und durchsichtigen Polypropylenlage gebildet. Diese Propylenlage ist so auf den Stand Up Pouch fixiert, das ein Entfernen sehr schwierig ist. Die Verpackungshülle ist zum Entnehmen des Halmelements leicht zu öffnen. Durch den festen Verbund der Verpackungshülle mit dem Stand Up Pouch wird ein wirksames und gemeinsames Recycling erreicht.

Eine Querschnittsfläche des Einstecksystems und eine Querschnittsfläche des Halmelements, unter Berücksichtigung einer Wanddicke der Halmwandung, können ähnlich sein, wobei die Querschnittsfläche des Einsteckbereichs 1 % bis 100 %, insbesondere 30 % bis 70 % größer sein kann als die Querschnittsfläche des Halmelements, unter der Berücksichtigung der Wanddicke der Halmwandung.

Als Druckverfahren für qualitativ hochwertige Verpackungen findet meistens ein Reihendruckverfahren, wie beispielsweise das Tiefdruckverfahren oder das Flexo-Reihendruckverfahren, Anwendung.

Die Außenlage weist einen Druck auf, der vorzugsweise im Umkehrdruck aufgebracht ist. Dabei kann der Druck vorteilhafterweise als durchscheinender Druck bzw. von der Rückseite auf der Innenseite der Außenlage aufgebracht sein, wodurch das Druckbild von der Außenlage besonders geschützt wird. Zur Kennzeichnung der Marke und der Getränkeinhaltsstoffe sowie zur Gestaltung des optischen Eindrucks des Getränkebeutels wird die Außenlage bedruckt.

Ein häufig eingesetztes Verfahren zum Bedrucken der Außenlage ist der Flexo-Reihendruck. Dabei handelt es sich um ein direktes Hochdruckverfahren, das auch als ein Rollenrotationsdruckverfahren bezeichnet wird. Die flexiblen Druckplatten, die aus Fotopolymer oder Gummi bestehen, werden in Kombination mit niedrigviskosen Druckfarben verwendet. Dabei sind die erhabenen Stellen der Druckform bildtragend. Die Vorteile liegen in der Wirtschaftlichkeit durch die Ausnutzung einer großen Druckbreite und einer hohen Druckgeschwindigkeit, sowie die Disponibilität kostengünstiger Druckfarben. Die Druckwerkzeuge, Photopolymer-Druckplatten und/oder lasergravierte Elastomerhüllen sind gut verfügbar. Großauflagen lassen sich mit dem Flexodruck wirtschaftlich gut darstellen.

Bei einer alternativen Variante der Erfindung kann auch auf die Funktionslage und/oder auf eine metallisierte Schicht ein Druck aufgebracht werden.

Die Bestimmung der Gasdurchlässigkeit von Folien erfolgt nach DIN EN ISO 2556 unter atmosphärischem Druck. Dabei trennt ein Probekörper aus einer Folie zwei Kammern, von denen die eine das Prüfgas bei atmosphärischem Druck enthält, aus der anderen mit bekanntem Anfangsvolumen wird die Luft evakuiert, bis nahezu Vakuum erreicht ist. Die Gasmenge, die durch den Probekörper von einer Kammer in die andere strömt, wird in Abhängigkeit von der Zeit bestimmt, indem der Druckanstieg in der zweiten Kammer mit einem Manometer gemessen wird.

Vorteilhafterweise weist der Stand Up Pouch eine Sauerstoffdurchlassrate von weniger als 10 cm³/m² · Tag · bar, vorzugsweise von weniger als 5 cm³/m² · Tag · bar, insbesondere von weniger als 0,1 cm³/m² · Tag · bar auf, gemessen bei 23 °C und 0 % r. F. Dadurch können Getränke in dem Stand Up Pouch ohne künstliche Konservierungsstoffe lange haltbar aufbewahrt werden.

Die Bestimmung der Wasserdampfdurchlässigkeit erfolgt nach DIN 53116 mithilfe eines gravimetrischen Messverfahrens. Ein mit einem Trockenmittel gefüllter Prüfbehälter wird durch die Probe einer Pouchfolie verschlossen und einem definierten Prüfklima ausgesetzt. Die durch die Probe permeierende Wassermenge wird durch Wiegen bestimmt. Dabei kann eine Wassermenge in einem Bereich von 1 - 200 g/(m² · d) nachgewiesen werden. Die Nachweisgrenze ist weiterhin abhängig von Musterbeschaffenheit und der Musterdicke.

Idealerweise weist der Stand Up Pouch eine Wasserdampfdurchlässigkeit von weniger als 10 g/m², vorzugsweise von weniger als 5 g/m², insbesondere von weniger als 0,1 g/m² in 24 h nach ASTM D6701-01 auf. Dadurch können heißabgefüllte Flüssigkeiten in dem Stand Up Pouch lange haltbar aufbewahrt werden, ohne dass der Inhalt aus dem Beutel verdunstet.

Die Messung der Dicke der Folie wurde nach DIN 53370 ermittelt und als Mittelwert angegeben. Bei einer vorteilhaften Variante der Erfindung weist die Vorderseite und/oder die Rückseite eine Dicke von weniger als 180 µm, vorzugsweise weniger als 160 µm, insbesondere weniger als 140 µm auf und/oder mehr als 80 µm, vorzugsweise mehr als 90 µm, insbesondere mehr als 100 µm auf. Hierdurch ist der Stand Up Pouch besonders dünn und somit auch leicht ausgebildet, wobei er dennoch eine hervorragende Widerstandsfähigkeit aufweist.

Bei einer günstigen Variante ist die Dicke der Vorderseite und/oder die Dicke der Rückseite um mehr als um den Faktor 1,1, vorzugsweise um mehr als den Faktor 1,2, insbesondere um mehr als den Faktor 1,3 größer als die Dicke des Bodens ausgebildet und/oder um weniger als um den Faktor 2,0, vorzugsweise um weniger als den Faktor 1,8, insbesondere um weniger als den Faktor 1,6 größer als die Dicke des Bodens ausgebildet. Somit kann der Materialeinsatz minimal ausgeführt werden. Gleichzeitig kann die für die stabile Ausformung des Stand Up Pouches notwendige Steifigkeit in den Seitenflächen gewährleistet werden.

Bei einer besonders vorteilhaften Variante der Erfindung ist die Siegellage aus einer mehrschichtigem Cast-Polypropylenlage gebildet. Die Siegellage eignet sich besonders günstig für einen Siegelprozess.

Bei einer günstigen Variante der Erfindung weist mindestens eine Schicht der mehrschichtigem Cast-Polypropylenlage einen Anteil an TiO₂ auf.

Der Füllstoffgehalt kann über bekannte Messverfahren wie Veraschung ermittelt werden. Eine Probe mit bekannter Einwaage wird bis zu einer Temperatur erhitzt, bei der sich das Polymer thermisch zersetzt, der Füllstoff aber nicht. Bewährt haben sich hierfür beispielsweise 560 °C. Anschließend wird erneut das Probengewicht gemessen. Über die Differenz Aus- und Einwaage lässt sich der Polymergehalt pro Quadratmeter berechnen.

Als Alternative zur Veraschung ist eine TGA-Messung möglich, bei der das Gewicht einer Probe kontinuierlich bei der Erhitzung gemessen wird. Diese Prüfmethode kann ebenfalls klar zwischen Polymer und Füllstoff differenzieren und erlaubt den Polymeranteil der Folie zu ermitteln.

Bei einer günstigen Variante der Erfindung weist mindestens eine Schicht der mehrschichtigem Cast-Polypropylenlage einen anorganischen Füllstoff auf, wobei der Anteil an Füllstoff mehr als 0,5 Gew.-%, vorzugsweise mehr als 1,0 Gew.-%, insbesondere mehr als 1,5 Gew.-% beträgt.

Idealerweise ist der Füllstoff als Titandioxid ausgeführt, wodurch eine weiße Schicht mit einer vorteilhaften Opazität erzielt werden kann.

Bei einer besonders günstigen Variante weist die gefüllte Schicht der Siegellage eine Opazität nach DIN 53416 von mehr als 55 %, vorzugsweise mehr als 70 %, insbesondere mehr als 85 % auf. Dadurch wird das Licht, das von außen auf den Stand Up Pouch trifft, vorteilhaft absorbiert und somit die Haltbarkeit des Getränks im Stand Up Pouch günstig unterstützt.

Bei einer bevorzugten Variante ist die innerste Schicht der mehrschichtigen Cast-Polypropylenlage mit Kontakt zum Getränk frei von Pigmenten, insbesondere frei von Titandioxid, ausgebildet. Dadurch kann ein Kontakt oder gar eine Kontamination des Getränks mit Pigment wirksam vermieden werden.

Eine besondere Herausforderung besteht in der Maßgenauigkeit der Vorder- und der Rückseite, die prinzipiell aus dem gleichen Material, insbesondere aus dem gleichen Rollenmaterial aufgebaut sind. Dabei werden die spätere Vorder- und Rückseite gleichzeitig auf ein Rollenmaterial der Außenlage aufgedruckt und mit der Funktionslage sowie mit der Siegellage verklebt. Nur durch die besondere Materialauswahl und das besondere Herstellungsverfahren ist es möglich eine so maßhaltige Außenlage zu erzeugen, die mit ganz geringen Toleranzen bedruckt werden kann. Die Außenlage ist gekennzeichnet durch eine besonders geringe Abweichung bzgl. der Dicke je Flächeneinheit.

Vorzugsweise bilden die Vorder- und die Rückseite einen spiegelsymmetrischen Aufbau hinsichtlich der verschiedenen Lagen. Bei einer alternativen Variante der Erfindung können die Lagen auch unterschiedlich angeordnet sein.

Bei einer alternativen Variante der Erfindung kann prinzipiell die Funktionslage auch über eine Thermolaminierung mit der Außenlage und der Siegellage verbunden werden.

Bei einer günstigen Variante der Erfindung umfasst die Siegellage einen Anteil an einem antistatischem Mittel. Dabei kann das antistatische Mittel aus der Stoffgruppe von Glycerylestern, von Fettsäuren, tertiären Aminen, Fettsäureamiden, Hydroxylfettsäureamiden, Alkalimetallsulfonaten, Polyethermodifizierten Polydiorganosiloxanen, Polyalkylphenylsiloxanen und/oder Mischungen davon ausgewählt sein.

Vorzugsweise enthält die Siegellage ein Antistatikum in einer Menge von 0,01 bis 2 Gew.-% der Lage, vorzugsweise von 0,1 bis 1,5 Gew.-% und am meisten vorzugsweise von 0,4 bis 1,0 Gew.-%.

Da die Lagen vor der Konfektionierung und Siegelung zu Stand Up Pouches oft in Form von Stapeln oder Rollen gelagert werden, könnte es zur Migration des Antistatikums kommen. Deswegen kann die Außenlage vorbeugend mit einem Antistatikum ausgerüstet sein.

Bei einer günstigen Variante der Erfindung weisen die Vorderseite, die Rückseite und der Boden des Stand Up Pouches einen Schrumpf von weniger als 2,5 %, vorzugsweise von weniger als 2,0 %, insbesondere von weniger als 1,5 % auf. Dadurch sind die Vorderseite, die Rückseite und der Boden auch in der Ausführung als Monomaterialkonstruktion besonders maßtreu, wodurch ein Bedrucken sehr exakt möglich ist. Diese Maßbeständigkeit ist insbesondere bei der Heißbefüllung vorteilhaft.

Bei einer günstigen Variante weist der Stand Up Pouch, insbesondere die Außenlage und/oder die Funktionslage, eine Barriere gegen UV-Licht im Wellenlängenbereich von 250 - 800 nm auf. Dabei beträgt die Transmission weniger als 5 %, vorzugsweise weniger 3 %, insbesondere weniger als 1 %.

Insgesamt ist es nicht trivial die Summe dieser Spezifikationen mit einer Monomaterialkonstruktion zu erfüllen. Dies ist nur durch die besondere Kombination der ausgewählten, als Monomaterial oder mehrere Materialschichten umfassend ausgeführten Einzellagen und das besondere Herstellungsverfahren zu erzielen. Darüber hinaus kann der Stand Up Pouch auch eingefroren werden und auch diese, damit verbundenen mechanischen Einwirkungen verkraften.

Bei einer weiteren Variante der Erfindung weist die Außenlage eine hitzebeständige Beschichtung auf. Diese Beschichtung kann beispielsweise in Form einer Schicht aus einer Mischung aus einem amorphen Polyamid und einem teilkristallinen Polyamid ausgebildet sein. Eine solche Beschichtung bietet eine verbesserte Gas-, insbesondere Sauerstoffbarriere und kann in weiteren Ausführungsformen mit einer dünnen Metall- oder Metalloxidschicht versehen werden, z. B. mittels eines Vakuumabscheidungsverfahrens.

Vorteilhafterweise erhöht die hitzebeständige Beschichtung die Siegelbeständigkeit der Außenlage und somit auch des gesamten Stand Up Pouch im Vergleich zu einer reinen Polypropylen-Außenlage um mehr als 10 °C, vorzugsweise um mehr als 20 °C, insbesondere um mehr als 25 °C.

In anderen Ausführungsformen besteht die äußere Schicht der Außenlage zu mindestens 90 Gew.-%, vorzugsweise zu mehr als 95 Gew.-%, aus einer Mischung aus einem amorphen Polyamid und einem teilkristallinen Polyamid. Die äußere Schicht der Außenlage beträgt vorzugsweise eine Dicke von 2 bis 4 µm.

Die äußere Schicht der Außenlage ist in dieser Ausführung bei der Herstellung des Stand Up Pouches besonders vorteilhaft, weil sie deutlich weniger dazu neigt an den Siegelbacken zu haften, durch die die Wärme zur Bildung der Siegellinien auf die Vorder-, die Rückseite und den Boden des Stand Up Pouches geleitet werden. Dabei ist anzumerken, dass sich das Polyamid in den überschaubaren Anteilen, bezogen auf die Gesamtmasse des Stand Up Pouches, vollständig kompatibel mit dem Konzept des Materialrecyclings erwiesen hat.

Die Vorderseite, die Rückseite und der Boden des Stand Up Pouches sind durch eine Siegelstruktur verbunden. Dabei werden die rechteckige Vorder- und Rückseite übereinandergelegt und dazwischen ein w-förmig gefalteter Boden eingelegt, wobei der Boden vorzugsweise Stanzungen zur Realisierung der senkrechten Siegellinien aufweist.

Die raumordnenden Begriffe beziehen sich auf einen befüllten und aufgestellten Stand Up Pouch.

Bevorzugt werden zunächst die waagrechten Siegellinien und die Siegellinien mit einem Verlauf erzeugt, um den Boden mit der Vorder- und der Rückseite zu verbinden. Dabei weist die Siegellinie mit einem Verlauf eine Überlappung mit der waagrechten Siegellinie auf, die vorzugsweise ausgehend vom Schwerpunkt der Vorder- und Rückseite eine Rundung mit einem Radius von R44 beschreibt und dann in Schrägsiegellinien übergehen, die sich bis zur oberen Bodenfalte erstrecken. Vorteilhafterweise werden die senkrechten Siegellinien abschließend ausgeführt, die zudem auch den gefalteten Boden im Bereich der Stanzungen umfassen.

Idealerweise weisen die Siegellinien eine Breite von 4 mm auf. Dabei betragen die inneren Radien an den Übergängen der senkrechten zur waagrechten und/oder an den Übergängen der Siegellinien mit einem Verlauf zur senkrechten oder zur waagrechten Siegellinie R1. Zudem weisen die abgerundeten Ecken an der Außenseite des Stand Up Pouches bevorzugt einen Radius R4 auf.

Bei einer Weiterentwicklung der Erfindung weisen die senkrechten Siegellinien eine Breite im Bereich von 4,1 bis 5 mm auf.

Zur Gewährleistung einer erhöhten Stabilität, die insbesondere durch eine Realisierung einer Monomaterialkonstruktion oder eines Schichtaufbaus der einzelnen Lagen des Stand Up Pouches vorteilhaft ist, ist eine Übergangsstruktur zwischen den senkrechten Siegellinien und den ansteigenden Siegellinien, die einen Verlauf aufweisen, ausgebildet.

Die gesiegelte Übergangsstruktur zeichnet sich insbesondere durch eine vergrößerte Siegelfläche aus und verleiht dem Stand Up Pouch auch in der Monomaterialkonstruktion ein sicheres Standverhalten und steigert die Festigkeit der Siegelnähte, auch unter den Einwirkungen der Heißabfüllung in den Stand Up Pouch. Dazu weist die Übergangsstruktur eine besondere Form auf.

Bei einer besonders günstigen Variante der Erfindung weist die Übergangsstruktur eine vertikale Erstreckung im Verhältnis zur Gesamtlänge der senkrechten Siegellinien von mehr als 0,2 %, vorzugsweise mehr als 0,4 %, insbesondere mehr als 0,6 % auf und/oder weniger als 8 %, vorzugsweise weniger als 6 %, insbesondere weniger als 4 % auf.

Idealerweise weist die Übergangsstruktur eine Breite im Verhältnis zur senkrechten Siegellinie auf, wobei die Breite mehr als 5 %, vorzugsweise mehr als 10 %, insbesondere mehr als 15 % beträgt und/oder die Breite weniger als 40 %, vorzugsweise weniger als 35 %, insbesondere weniger als 30 % beträgt.

Bei einer besonders bevorzugten Variante der Erfindung weist die Übergangsstruktur die Kontur eines Kreises oder einer Ellipse oder einer Linse oder eines Langrunds oder eines Rechtecks oder eines Quadrats auf. Dabei kann die Übergangsstruktur mit der senkrechten Siegellinie und/oder der Siegellinie mit einem Verlauf überlappen, wodurch sich nur ein Teil der Kontur in der Siegelstruktur zusätzlich abzeichnet. Die Übergangsstruktur gewährleistet trotz veränderter mechanischer Eigenschaften der Monomaterialkonstruktion die typisch, bauchige Form des Stand Up Pouches.

Vorteilhafterweise weist die Übergangsstruktur ein Kreissegment auf mit einen Radius R, der orthogonal zu dem Kreissegment ausgerichtet ist, wobei der Radius mehr als R2, vorzugsweise mehr als R3, insbesondere mehr als R4 beträgt und/oder der Radius weniger als R30, vorzugsweise weniger als R25, insbesondere weniger als R20 beträgt.

Dabei kann der Radius des Kreissegmentes ausgehend von einer Draufsicht auf den Stand Up Pouch nach außen oder nach innen weisen.

Vorzugsweise sind die Vorderseite und die Rückseite des Stand Up Pouches durch senkrechte Siegellinien verbunden.

Bevorzugt dienen die waagrechten Siegellinien und die Siegellinien mit einem Verlauf zur Verbindung der Vorder- oder der Rückseite mit dem Boden des Stand Up Pouches.

Idealerweise ist der Boden mit der Vorderseite und der Rückseite über senkrechte Siegellinien und/oder waagerechte Siegellinien und/oder ansteigenden Siegellinien verbunden.

Bei einer besonders günstigen Variante der Erfindung weisen die senkrechten Siegellinien mindestens eine Verstärkungsstruktur zur Taillierung des Pouches auf.

Die Verstärkungsstruktur ist vorzugweise in der oberen Hälfte des Stand Up Pouches angeordnet.

Bei einer besonders bevorzugten Variante der Erfindung weist die Verstärkungsstruktur die Kontur eines Kreises oder einer Ellipse oder einer Linse oder eines Langrunds oder eines Rechtecks oder eines Quadrats auf. Dabei kann die Übergangsstruktur mit der senkrechten Siegellinie überlappen.

Bei einer vorteilhaften Variante der Erfindung wird der gesiegelte Stand Up Pouch mit einem Getränk befüllt, das eine Temperatur von bis zu 85 °C aufweist. Direkt nach dem Füllvorgang wird der Stand Up Pouch vorzugsweise mit einer waagrechten Ultraschallschweißung verschlossen. Alternativ kann der Stand Up Pouch auch mit einer Heißsiegelung verschlossen werden.

Idealerweise werden zusätzlich zur Ultraschallverschweißung eine waagrechte Siegellinie zum dauerhaften Verschluss des Stand Up Pouches ausgebildet.

Gemäß der Erfindung umfasst das Verfahren zur Herstellung eines Stand Up Pouches das Extrudieren (oder Co-Extrudieren oder Verkleben bei Vorsehen mehrerer Schichten in der jeweiligen Lage) der Außenlage und der Siegellage, das Verkleben der Außenlage mit der Siegellage sowie das Verbinden der Vorderseite mit der Rückseite und dem Boden mit einer Siegelstruktur zu einem Stand Up Pouch. Idealerweise wird die Siegellage nicht unmittelbar mit der Außenlage verklebt. Bei einer günstigen Variante der Erfindung wird zusätzlich eine Funktionsschicht zwischen der Außenlage und der Siegellage verklebt. Dabei wird die Siegellage gegenüber der Außenlage mit einer größeren Dicke ausgebildet.

Erfindungsgemäß wird ein Stand Up Pouch als vollständig recycelfähige, auf polypropylenbasierte Getränkeeinwegverpackung für eine Heißabfüllung von Getränken verwendet.

Weitere Vorteile und Merkmale der Erfindung ergeben sich aus der Beschreibung eines Ausführungsbeispiels anhand von Zeichnungen und aus den Zeichnungen selbst.

### Dabei zeigt

- Fig. 1: eine perspektivische Darstellung eines Stand Up Pouches,
- Fig. 2: eine Darstellung der Siegelstruktur und des Einstecksystems,
- Fig. 3: eine schematische Darstellung des Aufbaus der Vorder- und Rückseite,
- Fig. 4: eine schematische Darstellung des Bodenaufbaus.

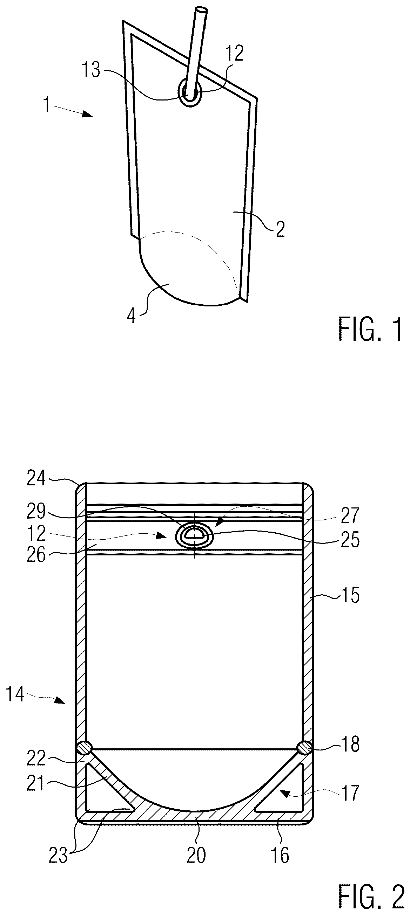

In Fig. 1 ist eine perspektivische Darstellung eines recyclefähigen Stand Up Pouches 1 für Getränke mit einer Vorderseite 2, einer Rückseite und einem Boden 4 dargestellt. Auf der Vorderseite 2 ist eine Einsteckvorrichtung 12 angeordnet, in die ein Trinkhalm 13 eingeführt ist.

Fig. 2 zeigt eine Darstellung der Siegelstruktur des Stand Up Pouches 1. Dazu sind die Vorderseite 2, die Rückseite 3 und der Boden 4 des Stand Up Pouches durch eine Siegelstruktur 14 verbunden. Hierzu ist zwischen der rechteckigen Vorderseite 2 und der rechteckigen Rückseite 3 ein w-förmig gefalteter Boden 4 eingelegt.

Die waagrechten Siegellinien 16 und die Siegellinien mit einem Verlauf 17 verbinden den Boden 4 mit der Vorderseite 2 und der Rückseite 3. Die Siegellinie mit einem Verlauf 17 weist eine Überlappung mit der waagrechten Siegellinie 16 in der unteren Mitte der Vorderseite 2 als auch der Rückseite 3 auf. Dabei weist die Siegellinie mit einem Verlauf 17 ausgehend vom Schwerpunkt der Vorderseite 2 bzw. Rückseite 3 eine Rundung 20 mit einem Radius von R44 auf und erstreckt sich dann in Schrägsiegellinien 21, die sich bis zur oberen Bodenfalte 22 erstrecken.

Die senkrechten Siegellinien 15 verbinden die Vorderseite 2 mit der Rückseite 3. Im Bereich des Bodens 4 sind in der Abbildung nicht dargestellte Stanzungen im Boden zur Realisierung der senkrechten Siegellinien 15 angeordnet, wodurch die Siegellagen 9 der Vorderseite 2 und der Rückseite 3 eine Berührungsfläche zur Ausbildung der Siegelung finden.

Die Siegellinien 15, 16 und 17 weisen eine Breite von 4 mm auf. Dabei betragen die inneren Radien 23 an den Übergängen der senkrechten Siegellinie 15 zur waagrechten Siegellinie und/oder an den Übergängen der Siegellinien mit einem Verlauf 17 zur senkrechten Siegellinie 15 oder zur waagrechten Siegellinie 16 R1. Zudem weisen die abgerundeten Ecken 24 an der Außenseite des Stand Up Pouches einen Radius R4 auf.

Zur Gewährleistung einer erhöhten Stabilität, die insbesondere durch eine Realisierung einer Monomaterialkonstruktion des Stand Up Pouches 1 vorteilhaft ist, ist eine Übergangsstruktur 18 zwischen den senkrechten Siegellinien 15 und den Siegellinien mit einem Verlauf 17 ausgebildet.

Das Einstecksystem 12 ist in der gezeigten Ausführungsvariante aus der Kombination von Öffnung 25 in Form einer halbkreisförmigen Ausstanzung in der Vorderseite 2 und dem zwischen der Vorderseite 2 und der Rückseite 3 über die senkrechte Siegellinie 15 eingesiegelten Streifen 26 ausgebildet. Der Streifen 26 weist zudem eine an die Ausstanzung angepasste Siegelform 29 auf.

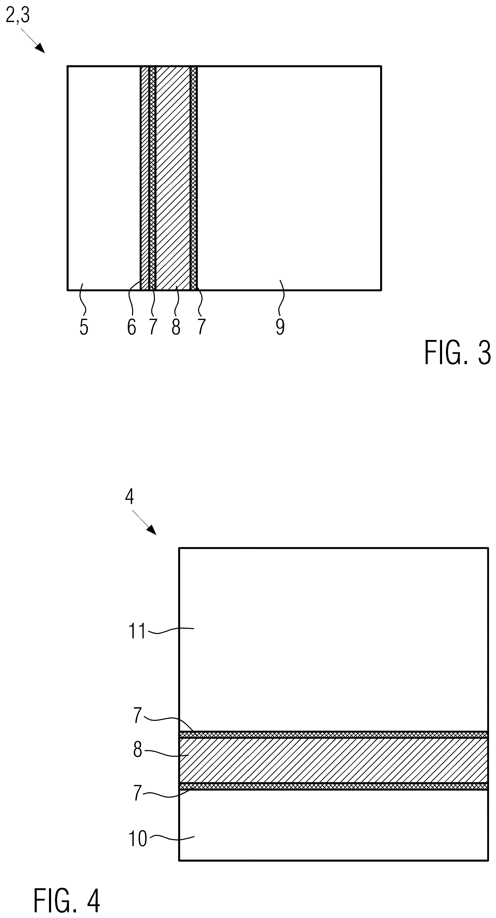

Fig. 3 zeigt eine schematische Darstellung des Aufbaus der Vorderseite 2 und der Rückseite 3. Auf der Außenseite des Stand Up Pouches 1 ist eine transparente Außenlage 5 angeordnet, auf die in einem Konterdruckverfahren ein Druck 6 aufgebracht ist. Die Innenseite des Stand Up Pouches 1 wird von einer Siegellage 9 gebildet. Die Außenlage 5 und die Siegellage 9 sind jeweils mit einer Klebeschicht 7 mit einer Funktionslage 8 verbunden.

In dieser Ausführungsvariante besteht die Außenlage 5 aus einem BOPP (oder umfasst dieses) und weist eine Dicke von 30 µm auf. Die Siegellage 9 ist aus einem Cast-PP gebildet (oder umfasst dieses) und weist eine Dicke von 80 µm auf. Die Funktionslage 8 ist aus einem BOPP ausgebildet (oder umfasst dieses), das eine aufgedampfte Aluminiumschicht aufweist und weist eine Dicke von 16 µm, eine Wasserdampfdurchlässigkeit von weniger als 0,1 g/m² in 24 h sowie eine Sauerstoffdurchlässigkeitsrate von weniger als 0,1 cm³/m² in 24 h, auf.

In Fig. 4 ist eine schematische Darstellung des Aufbaus des Bodens 4 dargestellt. Die Außenlage 10 und die Siegellage 11 sind jeweils mit einer Klebeschicht 7 mit einer Funktionslage 8 verbunden. In dieser Ausführungsvariante besteht die Außenlage 10 aus einem BOPP (oder umfasst dieses) und weist eine Dicke von 20 µm auf. Die Siegellage 11 ist aus einem Cast-PP gebildet (oder umfasst dieses) und weist eine Dicke von 60 µm. Die Funktionslage 8 ist aus einem BOPP mit aufgedampfter Aluminiumschicht ausgebildet (oder umfasst dieses) und weist eine Dicke von 16 µm auf.

Wie bereits beschrieben, ist die Erfindung nicht auf einen Stand Up Pouch mit einer Außenlage, einer Funktionslage (optional vorgesehen) und einer Siegellage bestehend aus jeweils nur einer Materialschicht beschränkt. Es können auch mehrere Materialschichten in wenigstens einer der Außenlage, der Siegellage und der Funktionslage (soweit vorgesehen) vorgesehen sein.

So kann in einer Ausführungsform vorgesehen sein, dass die Außenlage entsprechend der vorangegangenen beschriebenen Ausführungsformen in Fig. 1 bis 4 eine oder mehrere Schichten von orientiertem PP, insbesondere BOPP, umfasst. Diese Schichten können, müssen jedoch nicht gleich dick ausgeführt sein und es kann beispielsweise vorgesehen sein, dass die Außenlage (entweder der Vorderseite und/oder der Rückseite und/oder des Bodens) zwei Schichten aus orientiertem PP mit gleicher Schichtdicke oder zwei Schichten aus orientiertem PP mit ungleicher Schichtdicke umfasst oder drei oder mehr Schichten orientiertem PP mit gleicher oder zumindest teilweise verschiedener, insbesondere paarweise verschiedener Schichtdicken umfassen kann.

Es kann auch vorgesehen sein, dass eine oder mehrere Schichten der Außenlage nicht aus orientiertem PP bestehen oder orientiertes PP umfassen, sondern beispielsweise unorientiertes PP umfassen oder daraus bestehen. Zumindest ein Teil der Schichten der Außenlage kann beispielsweise coextrudiert sein. Bevorzugt werden alle Schichten der Außenlage gemeinsam coextrudiert.

Dabei kann in einer Ausführungsform vorgesehen sein, dass die Gesamtdicke der Außenlage zwischen 15 und 45 µm, insbesondere zwischen 20 und 30 µm, bevorzugt zwischen 25 und 35 µm, insbesondere 18 oder 20 oder 24 oder 28 oder 30 oder 32 oder 34 µm beträgt. Diese Dicke der Außenlage bewirkt eine vorteilhafte Steifigkeit, was die Standfähigkeit des Stand Up Pouches vorteilhaft beeinflussen kann.

Das Vorsehen einer Außenlage mit den hier beschriebenen Eigenschaften bewirkt zum einen eine reduzierte Dicke der Materialschichten für die Vorderseite und/oder Rückseite und den Boden und somit einen reduzierten Materialeinsatz, was sich vorteilhaft auf die Umweltverträglichkeit auswirkt. Gleichzeitig wird beispielsweise bei Verwendung von orientiertem PP, insbesondere BOPP für die Außenlage eine hohe Reißfestigkeit und/oder Stabilität gegenüber Schrumpfung des Pouches beim Siegeln erreicht, da BOPP einen vergleichsweise hohen Schmelzpunkt von etwa 168°C besitzt und sich damit bei geringeren SiegelTemperaturen wenig bis nicht verformt. Auch oder alternativ kann durch Verwendung entsprechender Materialien eine hohe Widerstandskraft gegenüber Bilden von Einstichlöchern (gemessen etwa gemäß ISO EN 14477) gewährleistet werden, was die Haltbarkeit des Pouches verbessern kann.

In Richtung des Innenvolumens des Standbeutels kann sich hieran eine Schicht anschließen, die optional Drucktinten enthalten kann und überdies als Klebeschicht (auch erste Klebeschicht), beispielsweise basierend auf PUR basierendem Kleber ausgeführt sein kann. Die Drucktinte kann in den Kleber eingearbeitet sein oder als zusätzliche Schicht vorgesehen sein. Die Schicht kann beispielsweise eine Schichtdicke von weniger als 10 µm, bevorzugt weniger als 6 µm, beispielsweise 5µm oder 4µm oder 3µm, umfassen und optional zum Verbinden mit einer optional vorgesehenen Funktionslage der Vorderseite und/oder der Rückseite und/oder des Bodens des Stand Up Pouches vorgesehen sein. Alternativ kann diese Schicht (wenn die Funktionslage nicht vorgesehen ist) auch eine direkte Verbindung mit der Siegellage der Vorderseite und/oder der Rückseite und/oder des Bodens des Stand Up Pouches bilden.

In Ausführungsformen, in denen eine Funktionslage entsprechend der vorangegangenen Ausführungsformen vorgesehen ist, kann diese auf der der Außenlage abgewandten Seite der weiteren Schicht (Klebeschicht) angebracht sein, wobei die erste Klebeschicht die Außenlage und die Funktionslage miteinander verbindet. und die Funktionsschicht kann beispielsweise aus einer Schicht oder mehreren Schichten von orientiertem und/oder nicht orientiertem PP bestehen oder diese umfassen. Bevorzugt ist zumindest eine dieser Schichten metallisiert und besonders bevorzugt ist eine der orientierten PP-Schichten, insbesondere eine BOPP-Schicht metallisiert. Diese Schicht kann, muss jedoch nicht die äußerste Schicht der Funktionslage in Richtung der Außenlage sein. Beispielsweise kann diese Schicht auch (bei einem Dreischichtsystem der Funktionslage) zwischen zwei anderen Schichten ohne Metallisierung angeordnet sein, die jeweils aus orientiertem PP bestehen oder dieses umfassen können.

Insgesamt ist bevorzugt die Dicke dieser Funktionslage kleiner als die Dicke der Außenlage und insbesondere kleiner 90% oder kleiner als als 75 % der Dicke der Außenlage, bevorzugt kleiner als 60 % der Dicke der Außenlage. Für den Fall, dass beispielsweise die Außenlage eine Dicke von 30 µm aufweist, kann vorgesehen sein, dass die Dicke der Funktionslage 12 oder 14 oder 16 oder 18 oder 20 µm beträgt. Beträgt die Dicke der Außenlage 22µm oder 20µm, so kann vorgesehen sein, dass die Dicke der Funktionslage 17µm oder 15µm oder 13µm beträgt.

Mit diesen verglichen mit der Außenlage dünneren, metallisierten Funktionslagen können bei reduziertem Materialeinsatz verbesserte Barriereeigenschaften etwa bezüglich Dichtheit gegenüber Diffusion von Gasen, wie Sauerstoff, realisiert werden.

Sofern die Funktionslage vorgesehen ist, kann sich an diese in Richtung des Innenvolumens des Stand Up Pouches erneut eine Schicht (eine zweite Klebeschicht), umfassend beispielsweise einen PUR-basierten Kleber, anschließen. Auch in dieser Schicht können abhängig von der Ausgestaltung der aufliegenden Schichten in Richtung der Außenfläche des Stand Up Pouches ein oder mehrere Drucktinten enthalten sein, müssen dies jedoch nicht. Die Dicke der zweiten Klebeschicht kann der Dicke der ersten Klebeschicht zwischen der Außenlage und der gegebenenfalls vorgesehenen Funktionslage entsprechen und kann beispielsweise gleich groß, kleiner oder größer sein. Beträgt die Schichtdicke der ersten Klebeschicht zwischen Außenlage und Funktionslage beispielsweise 3 bis 5 µm (beispielsweise 4µm), kann die Schichtdicke der sich an die Funktionslage in Richtung der Siegellage anschließenden zweiten Klebeschicht beispielsweise 2 bis 4 µm, bevorzugt 3 µm, betragen.

Ist keine Funktionslage vorgesehen, kann die zweite Klebeschicht die einzige Schicht des Stand Up Pouches sein, in der Drucktinten eingebracht sind.

In Richtung des Innenvolumens des Stand Up Pouches schließt sich an diese zweite Klebeschicht die Siegellage an. Diese kann, wie beschrieben, aus einer einzelnen Schicht PP, gegebenenfalls umfassend Additive wie Titanoxid (TiO₂), bestehen. Alternativ kann jedoch auch vorgesehen sein, dass die Siegellage wenigstens zwei, bevorzugt wenigstens drei oder mehr Schichten PP umfasst. Diese Schichten können eine gleiche Schichtdicke besitzen oder unterschiedlich dick sein. Sie können ferner alle gleich aufgebaut sein (beispielsweise bestehend aus PP-Homopolymer oder PP-Copolymer, gegebenenfalls mit Additiven wie TiO₂, oder BOPP oder CPP. oder die einzelnen Schichten der Siegellage können auch unterschiedlich ausgestaltet sein.

So kann vorgesehen sein, dass eine in Richtung der Außenlage weisende äußerste Schicht der Siegellage PP-Homopolymer und optional TiO₂ umfasst und eine sich in Richtung des Innenvolumens des Stand Up Pouches anschließende Schicht aus PP-Copolymer besteht oder dieses umfasst oder alternativ aus BOPP oder CPP besteht oder dieses umfasst. Daran erneut anschließen kann sich eine weitere Schicht von PP-Homopolymer (optional umfassend TiO₂) und/oder PP-Copolymer und/oder BOPP und/oder CPP.

Um die Steifigkeit des Stand Up Pouches vorteilhaft zu beeinflussen und gleichzeitig eine hohe Dichtheit des Stand Up Pouches zu gewährleisten, kann vorgesehen sein, dass sich in Richtung der Außenlage des Stand Up Pouches zumindest zwei PP-Homopolymer-Schichten mit TiO₂ unmittelbar aneinander anschließen bzw. aufeinanderfolgen. Hierbei kann es sich um die zwei äußersten (in Richtung der Außenlage) Schichten der Siegellage und/oder um die zwei innenliegendsten (in Richtung des Innenvolumens des Stand Up Pouches) Schichten der Siegellage handeln.

Die Schichtdicken der einzelnen Schichten der Siegellage müssen nicht gleich sein, weisen zusammengenommen jedoch bevorzugt eine Schichtdicke zwischen 30 und 110 µm, besonders bevorzugt zwischen 80 und 100, besonders bevorzugt zwischen 85 und 95 µm, auf. Allgemein kann vorgesehen sein, dass die Dicke der Siegellage 100% bis 300% der Dicke der Außenlage beträgt. In einer Ausführungsform, in der die Dicke der Außenlage 35 oder 30 oder 20µm beträgt, kann die Dicke der Siegellage entsprechend 90µm oder 85µm oder 76µm oder 68µm oder 55µm betragen. Diese Dicke ist besonders vorteilhaft im Hinblick auf die zu erzielende geringe Durchlässigkeit beispielsweise für Sauerstoff oder CO₂ durch die Vorderseite bzw. Rückseite bzw. den Boden des Stand Up Pouches und sind gleichzeitig ausreichend gering, um den Materialeinsatz zu minimieren.

Während die Schichten der Siegellage gleich große Schichtdicke aufweisen können, kann insbesondere vorgesehen sein, dass beispielsweise bei Ausgestaltung der Siegellage mit drei Schichten die mittelste Schicht die größte Schichtdicke aufweist und beispielsweise aus PP-Homopolymer mit TiO₂ besteht oder dieses umfasst. Die Schichtdicke dieser mittleren Schicht kann mehr als 50 %, beispielsweise 75 % oder bis zu 65 % der gesamten Dicke der Siegellage betragen. Beträgt die Dicke der Siegellage beispielsweise 90 µm, so kann die Schichtdicke der mittleren Schicht bei einem Dreischichtsystem beispielsweise zwischen 45 und 57 µm betragen und insbesondere 49 oder 50 oder 51 oder 52 µm betragen. Auch andere Kombinationen sind hier denkbar. Beträgt die Dicke der Siegellage beispielsweise 68µm, so kann die Schichtdicke der mittleren Schicht beispielsweise 30 oder 35 oder 38 oder 42µm betragen. Beträgt die Dicke der Siegellage 76µm, kann die mittlere Schicht eine Dicke von 35 oder 40 oder 42 oder 45 µm aufweisen. Beträgt die Dicke der Siegelschicht 55µm, so kann die Schichtdicke der mittleren Schicht 20µm oder 25µm oder 30µm oder 32µm betragen.

Die, gesehen von der mittleren Schicht in Richtung der Außenlage weisende, zweite Schicht kann bis zu 60 %, bevorzugt höchstens bis zu 45 % der Schichtdicke der mittleren Schicht betragen. Beispielsweise kann diese Schicht eine Schichtdicke zwischen 12 und 25 µm, insbesondere zwischen 20 und 23 µm, beispielsweise 12, 14, 16, 18, 20 oder 22µm, besitzen und aus PP-Homopolymer mit Titanoxid bestehen oder dieses umfassen. Diese Schichtdicken ist grundsätzlich mit jeder der oben aufgeführten Schichtdicken der mittleren Schicht kombinierbar.

Auf der dem Innenvolumen des Stand Up Pouches zugewandten Seite der mittleren Schicht kann eine dritte Schicht angeordnet sein (beispielsweise eine weitere PP-Homopolymer- oder PP-Copolymer-Schicht optional mit TiO₂), deren Schichtdicke gleich der außenliegenden Schicht der Siegellage oder kleiner als diese Schichtdicke sein kann. Insbesondere kann die Schichtdicke dieser innenliegenden Schicht bevorzugt kleiner als 50 %, besonders bevorzugt kleiner als 40 % der Schichtdicke der mittleren Schicht, sein. Beträgt die Schichtdicke der mittleren Lage beispielsweise 50 µm, so kann die Schichtdicke der inneren Schicht beispielsweise kleiner als 25 µm, bevorzugt kleiner als 20 bis zu 10 µm, betragen und beispielsweise 16 oder 17 oder 18 µm betragen. Auch andere Schichtdicken können vorgesehen sein, beispielsweise 11µm oder 14µm, wobei sämtliche genannten Schichtdicken für die dritte Schicht mit allen Ausführungsformen der mittleren Schicht und der zweiten Schicht der Funktionslage kombinierbar sind.

Das Vorsehen einer Siegellage mit verschiedenen Schichten, die entsprechend obiger Ausführungsformen auch verschiedene Schichtdicke aufweisen können, wirkt sich vorteilhaft auf das Siegelergebnis und die Dichtheit des Stand Up Pouches aus. Das Vorsehen von drei Schichten für die Siegellage erlaubt auch eine Anpassung der einzelnen Schichten an spezielle Anforderungen, wobei das Vorsehen der Schichten der Siegellage aus demselben Material (PP) zusätzlich gute Recyclingeigenschaften und interne Stabilität der Siegellage gewährleisten kann. So kann die der Funktionslage zugewandte Schicht der Siegellage vorteilhaft die Hafteigenschaften der Siegellage an der Funktionslage verbessern. Die mittlere Schicht der Siegellage kann in den angegebenen Schichtdicken-Bereichen (siehe oben) die Stabilität vorteilhaft verbessern und/oder einen höheren Schmelzpunkt besitzen als die innerste Schicht der Siegellage, um ein zu starkes Schmelzen oder Verflüssigen der Siegellage zu vermeiden. Die innerste Schicht der Siegellage kann hingegen eine reduzierte Schmelztemperatur besitzen (beispielsweise zwischen 70°C und 110°C), sodass ein zuverlässiges Siegeln etwa mit einer weiteren inneren Schicht einer Siegellage einer anderen Fläche des Stand Up Pouches erzielt werden kann. Die angegeben Schichtdicken stellen dabei sicher, dass ein zuverlässiges Verbinden von Flächen des Pouches ohne Bildung von Löchern oder Undichtigkeiten erfolgt.

Die beschriebenen Ausführungsformen gelten grundsätzlich für die Außenlage, die Funktionslage und die Siegellage sowohl der Vorderseite als auch der Rückseite als auch den Boden des Stand Up Pouches.

Da jedoch die Vorderseite und die Rückseite des Stand Up Pouches üblicherweise so ausgeführt sind, dass sie den Stand Up Pouch stabilisieren und durch den Boden des Stand Up Pouches ein geringerer Beitrag geleistet wird, kann die gesamte Dicke des Bodens (umfassend die Außenlage, die Funktionslage und die Siegellage sowie etwaig dazwischen liegende Schichten) kleiner sein als die gesamte Dicke der Außenlage, der Funktionslage und der Siegellage sowie dazwischenliegender Schichten für die Vorderseite und die Rückseite. Beispielsweise kann die Dicke des Bodens, verglichen mit der Dicke der Vorderseite oder der Rückseite höchstens 80 % der Dicke der Vorder- bzw. Rückseite oder höchstens 75 % der Vorder-/Rückseite betragen.

Beträgt die Gesamtdicke der Außenlage, Funktionslage und Siegellage sowie etwaig dazwischenliegender Klebeschichten für die Vorderseite bzw. Rückseite beispielsweise 129 µm, so kann die Gesamtdicke des Bodens beispielsweise kleiner als 100 µm, bevorzugt jedoch größer als 90 µm, insbesondere zwischen 93 und 97 µm, besonders bevorzugt 94 oder 95 oder 96 µm betragen.

Dabei kann insbesondere bei Verwendung desselben Schichtaufbaus die Außenlage dünner ausgeführt sein als die entsprechende Außenlage der Vorder- bzw. Rückseite und beispielsweise bei einer Dicke der Außenlage der Vorder- oder Rückseite von 30 µm nur 18 µm oder 19 µm oder 20 µm oder 21 µm betragen, ansonsten aber den oben beschriebenen Schichtaufbau umfassen.

Auch die Funktionslage kann, muss jedoch nicht eine geringere Dicke aufweisen und kann bei einer Dicke der Funktionslage der Vorder- bzw. Rückseite von beispielsweise 16 oder 17 oder 18 µm nur eine Dicke von 15 µm aufweisen.

Auch die Siegellage kann optional und unabhängig von der Dicke der Außenlage und der optional vorgesehenen Funktionslage eine geringere Dicke aufweisen, als die Dicke der Vorder- bzw. Rückseite. Beträgt die Dicke der Siegellage der Vorder- bzw. Rückseite beispielsweise etwa 80 µm, wie etwa 76 µm, so kann die Dicke der Siegellage des Bodens beispielsweise kleiner als 60 µm, insbesondere 54 oder 55 oder 56 µm, betragen.

Dabei kann für die einzelnen Schichten dieser Siegellage dann entsprechend eine geringere Schichtdicke gewählt werden. Für eine Schichtdicke der Siegellage der Vorder- bzw. Rückseite von in Summe 76 µm mit einzelnen Schichten einer Dicke von jeweils 18, 43 und 16 µm (dreischichtiger Aufbau beispielsweise wie oben beschrieben), kann für die Siegellage des Bodens eine Gesamtdicke von 55 µm vorgesehen sein, wobei die einzelnen Schichten zwar den gleichen Schichtaufbau wie für die Seitenflächen aufweisen können, jedoch nur eine Schichtdicke von beispielsweise 14, 30 und 11 µm aufweisen. Der Schichtaufbau kann hier insbesondere ein dreischichtiger Aufbau mit den oben angegebenen Eigenschaften sein.

Beträgt hingegen die Schichtdicke der Vorder- bzw. Rückseite beispielsweise 90 µm mit einer Aufteilung in einem Dreischichtsystem mit Schichtdicken von 22, 50 und 18 µm und ansonsten dem oben beschriebenen Aufbau, kann für den Boden eine Schichtdicke von nur 60 bis 75, beispielsweise 65 oder 67 oder 68 oder 70 µm vorgesehen sein, wobei beispielsweise zumindestens drei der Schichten des Bodens (siehe obige Ausgestaltungen) beispielsweise Schichtdicken von 16, 38 und 14 µm aufweisen können.

Während hier verschiedene Ausführungsformen der Außenlage, der Funktionslage und der Siegellage sowie der ersten und zweiten Klebeschicht beschrieben wurden, ist ausdrücklich jede Kombination der einzeln angegebenen Schichten der jeweiligen Außenlage, Funktionslage und Siegellage sowie erster und zweiter Klebeschicht ebenfalls umfasst.

Die beschriebenen Lagen können einzeln oder in Kombination sowohl für Stand Up Pouches mit einem Innenvolumen von wenigstens 100ml oder von wenigstens 200ml bzw. wenigstens 330ml oder einer vorgesehenen Füllung mit wenigstens 100ml oder 200ml oder 330ml Flüssigkeit verwendet werden. Alle beschriebenen Ausführungsformen weisen diesbezüglich vorteilhafte Standfestigkeit und Recyclingfähigkeiten bei gleichzeitig hoher Dichtheit (auch gegenüber Diffusion von gasen wie Sauerstoff) auf. Auch jedes andere Volumen ist möglich. Insbesondere können Volumina bis zu 500ml oder bis zu 1l oder bis zu 2l vorgesehen sein.

In den vorangegangenen Ausführungsformen wurden Realisierung für das Material des Bodens sowie der Seitenwände beschrieben. In einer Ausführungsform, die mit sämtlichen beschriebenen Ausführungsformen in Kombination vorgesehen sein kann, ist vorgesehen, dass der Stand Up Pouch durch Verbinden von 3 Materialflächen, einer Vorderseite, einer Rückseite und eines Bodens, gebildet wird. Hiermit ist es möglich, in jeder der Materialflächen unterschiedliche Anforderungen zu realisieren.

So kann insbesondere vorgesehen sein, dass die Gesamtdicke des Bodens geringer ist als die Gesamtdicke der Seitenflächen (Vorderseite und Rückseite). In einer Ausführungsform ist die Gesamtdicke der Seitenflächen (Vorderseite und/oder Rückseite) um einen Faktor von 1,1 bis 2 größer als die Gesamtdicke des Bodens. Hiermit kann Material eingespart aber gleichzeitig ein stabiler Stand Up Pouch hergestellt werden, da die Stabilität des Pouches im Wesentlichen durch die Steifigkeit der Seitenflächen bewirkt wird.

Alternativ oder zusätzlich kann vorgesehen sein, dass die Außenlage (einer oder der Seitenflächen und/oder des Bodens) aus BOPP ausgebildet ist und wobei das BOPP um einen Faktor von mehr als 1,1 und weniger als 2, insbesondere mehr als 1,2 und weniger als 1,8 verstreckt ausgebildet ist. In diesem Bereich wird eine ausreichende Flexibilität der Außenlage bei gleichzeitig ausreichend hoher Steifigkeit mit möglichst geringem Materialeinsatz erreicht.

Es kann im Zusammenhang mit diesen Ausführungsformen (wie oben auch bereits beschrieben) oder alternativ auch vorgesehen sein, dass die Vorderseite und/oder die Rückseite und/oder der Boden mindestens eine Funktionslage aufweist, die zwischen der Außenlage und der Siegellage angeordnet ist, wobei die Funktionslage metallisiertes BOPP umfasst und wobei das metallisierte BOPP um einen Faktor von mehr als 1,1 und weniger als 2, insbesondere mehr als 1,2 und weniger als 1,8 verstreckt ausgebildet ist. Durch Vorsehen einer solchen Funktionslage kann eine ausreichende Dichtigkeit und Lichtundurchlässigkeit bei gleichzeitig ausreichend hoher Steifigkeit der Funktionslage und geringem Materialeinsatz realisiert werden.

Es kann ferner vorgesehen sein, dass die Siegellage aus Cast Polypropylen (CPP) ausgebildet ist und wobei das CPP um einen Faktor von mehr als 3 und weniger als 8, insbesondere von mehr als 4 und weniger als 7 verstreckt ausgebildet ist. Hiermit kann der Materialeinsatz der Siegellage vorteilhaft reduziert werden, gleichzeitig jedoch sichergestellt werden, dass genug CPP zum zuverlässigen Siegeln vorhanden ist.

Die bisher beschriebenen Faktoren für das Verstrecken der jeweiligen Lagen beziehen sich auf eine Richtung entlang der Transportrichtung oder der Maschinenrichtung. Quer zu dieser Richtung, also in einer Richtung transversal zur Transportrichtung kann der Faktor der Verstreckung kleiner als 1 sein, insbesondere zwischen 0,2 und 0,8, bevorzugt zwischen 0, 3 und 0,8 für die Außenlage und/oder die Funktionslage liegen. Für die Siegellage kann ein Faktor in einer Richtung transversal zur Maschinenrichtung für die Verstauchung zwischen 2 und 15, bevorzugt zwischen 3 und 12 liegen.

### Liste bevorzugter Ausführungsformen

1. Recyclefähiger Stand Up Pouch (1) für Getränke
   auf Basis von Polypropylen,
   mit einer Vorderseite (2), einer Rückseite (3) und einem Boden (4),
   wobei die Vorderseite (2), die Rückseite (3) und der Boden (4) jeweils eine transparente Außenlage (5, 10) und eine Siegellage (9, 11) aufweisen,
   **dadurch gekennzeichnet,**
   dass die Siegellage (9, 11) gegenüber der Außenlage (5, 10) eine größere Dicke aufweist.
2. Stand Up Pouch nach Ausführungsform 1, **dadurch gekennzeichnet,** dass die Siegellage (9, 11) gegenüber der Außenlage (5, 10) um mehr als den Faktor 2,00, vorzugsweise mehr als der Faktor 2,25, insbesondere um mehr als den Faktor 2,50 dicker ausgebildet ist.
3. Stand Up Pouch nach einer der Ausführungsformen 1 oder 2, **dadurch gekennzeichnet,** dass die Siegellage (9, 11) gegenüber der Außenlage (5, 10) um weniger als den Faktor 6,50, vorzugsweise um weniger als den Faktor 6,25, insbesondere um weniger als den Faktor dicker 6,00 ausgebildet ist.
4. Stand Up Pouch nach einer der Ausführungsformen 1 bis 3, wobei die Siegellage (9,11) gegenüber der Außenlage (5, 10) um einen Faktor von 2 bis 4 oder um einen Faktor von 2,5 bis 3,5 dicker ausgebildet ist.
5. Stand Up Pouch nach einer der Ausführungsformen 1 bis 4, **dadurch gekennzeichnet,** dass die Vorderseite (2) und/oder die Rückseite (3) und/oder der Boden (4) mindestens eine Funktionslage (8) aufweist, die zwischen der Außenlage (5,10) und der Siegellage (9, 11) angeordnet ist, wobei die Funktionslage (8) eine Dicke von weniger als 25 µm, vorzugsweise von weniger als 20 µm, insbesondere von weniger als 15 µm aufweist und/oder von mehr als 6 µm, vorzugsweise von mehr als 9 µm, insbesondere von mehr als 12 µm aufweist.
6. Stand Up Pouch nach Ausführungsform 5, **dadurch gekennzeichnet,** dass die Funktionslage (8) eine Barriereschicht und/oder eine metallisierte Schicht und/oder eine Metallschicht und/oder mindestens eine BOPP-Schicht aufweist.
7. Stand Up Pouch nach Ausführungsform 5 oder 6, **dadurch gekennzeichnet,** dass die Funktionslage (8) eine aufgedampfte Aluminiumschicht aufweist.
8. Stand Up Pouch nach einer der Ausführungsformen 1 bis 7, **dadurch gekennzeichnet,** dass die Außenlage (5) einen Druck (6) aufweist, der vorzugsweise im Umkehrdruck aufgebracht ist.
9. Stand Up Pouch nach einer der Ausführungsformen 1 bis 8, **dadurch gekennzeichnet,** dass der Stand Up Pouch (1) eine Sauerstoffdurchlassrate von weniger als 10 cm³/m² · Tag · bar, vorzugsweise von weniger als 5 cm³/m² · Tag · bar, insbesondere von weniger als 0,1 cm³/m² · Tag · bar aufweist, gemessen bei 23 °C und 0 % r. F
10. Stand Up Pouch nach einer der Ausführungsformen 1 bis 9, **dadurch gekennzeichnet,** dass der Stand Up Pouch (1) eine Wasserdampfdurchlässigkeit von weniger als 10 g/m², vorzugsweise von weniger als 5 g/m², insbesondere von weniger als 0,1 g/m² in 24 h nach ASTM D6701-01 aufweist.
11. Stand Up Pouch nach einer der Ausführungsformen 1 bis 10, **dadurch gekennzeichnet,** dass die Vorderseite (2) und/oder die Rückseite (3) eine Dicke von weniger als 180 µm, vorzugsweise weniger als 160 µm, insbesondere weniger als 140 µm aufweist und/oder mehr als 80 µm, vorzugsweise mehr als 90 µm, insbesondere mehr als 100 µm aufweist.
12. Stand Up Pouch nach einer der Ausführungsformen 1 bis 11, **dadurch gekennzeichnet,** dass die Dicke der Vorderseite (2) und/oder die Dicke der Rückseite (3) um mehr als um den Faktor 1,1, vorzugsweise um mehr als den Faktor 1,2, insbesondere um mehr als den Faktor 1,3 größer als die Dicke des Bodens (4) ausgebildet ist und/oder um weniger als um den Faktor 2,0, vorzugsweise um weniger als den Faktor 1,8, insbesondere um weniger als den Faktor 1,6 größer als die Dicke des Bodens (4) ausgebildet ist.
13. Stand Up Pouch nach einer der Ausführungsformen 1 bis 12, wobei die Dicke der Vorderseite (2) und/oder die Dicke der Rückseite (3) um mehr als den Faktor 1,05 und um weniger als den Faktor 1,5 oder um mehr als den Faktor 1,05 und um weniger als den Faktor 1,3 größer als die Dicke des Bodens ausgebildet ist.
14. Stand Up Pouch nach einer der Ausführungsformen 1 bis 12, **dadurch gekennzeichnet,** dass die Außenlage (5, 10) aus BOPP ausgebildet ist, wobei das BOPP um mehr als den Faktor 2,0, vorzugsweise um mehr als den Faktor 3,0, insbesondere um mehr als den Faktor 4,0 verstreckt ausgebildet ist und/oder weniger als um den Faktor 7,0, vorzugsweise um weniger als den Faktor 6,5, insbesondere um weniger als den Faktor 6,0 verstreckt ausgebildet ist.
15. Stand Up Pouch nach einer der Ausführungsformen 1 bis 14, wobei die Außenlage aus BOPP ausgebildet ist und wobei das BOPP um einen Faktor von mehr als 1,1 und weniger als 2, insbesondere mehr als 1,2 und weniger als 1,8 verstreckt ausgebildet ist.
16. Stand Up Pouch nach einer der Ausführungsformen 1 bis 15, wobei die Vorderseite (2) und/oder die Rückseite (3) und/oder der Boden (4) mindestens eine Funktionslage (8) aufweist, die zwischen der Außenlage (5,10) und der Siegellage (9, 11) angeordnet ist, wobei die Funktionslage metallisiertes BOPP umfasst und wobei das metallisierte BOPP um einen Faktor von mehr als 1,1 und weniger als 2, insbesondere mehr als 1,2 und weniger als 1,8 verstreckt ausgebildet ist.
17. Stand Up Pouch nach einer der Ausführungsformen 1 bis 16, wobei die Siegellage aus Cast Polypropylen (CPP) ausgebildet ist und wobei das CPP um einen Faktor von mehr als 3 und weniger als 8, insbesondere von mehr als 4 und weniger als 7 verstreckt ausgebildet ist.
18. Stand Up Pouch nach einer der Ausführungsformen 1 bis 17, **dadurch gekennzeichnet,** dass die Siegellage (9, 11) aus einer mehrschichtigen Cast-Polypropylenlage gebildet ist.
19. Stand Up Pouch nach einer der Ausführungsformen 1 bis 18, **dadurch gekennzeichnet,** dass die Vorderseite (2) und/oder die Rückseite (3) und/oder der Boden (4) einen Schrumpf von weniger als 2,5 %, vorzugsweise von weniger als 2,0 %, insbesondere von weniger als 1,5 % aufweist.
20. Stand Up Pouch nach einer der Ausführungsformen 1 bis 19, **dadurch gekennzeichnet,** dass die Außenlage (5, 10) eine hitzebeständige Beschichtung aufweist.
21. Verfahren zur Herstellung eines Stand Up Pouch (1) mit folgenden Schritten:
   - Extrudieren der Außenlage (5, 10) und der Siegellage (9, 11),
   - Verkleben der Außenlage (5, 10) mit der Siegellage (9, 11),
   - Verschweißen der Vorderseite (2) mit der Rückseite (3) und dem Boden (4) zu einem Stand Up Pouch (1),
   **dadurch gekennzeichnet,**
   dass die die Siegellage (9, 11) gegenüber der Außenlage (5, 10) mit einer größeren Dicke ausgebildet wird.
22. Verwendung eines Stand Up Pouch nach einer der Ausführungsformen 1 bis 20 als vollständig recycelfähige Getränkeeinwegverpackung für eine Heißabfüllung.

## Patentansprüche

1. Recyclefähiger Stand Up Pouch (1) für Getränke
auf Basis von Polypropylen,
mit einer Vorderseite (2), einer Rückseite (3) und einem Boden (4),
wobei die Vorderseite (2), die Rückseite (3) und der Boden (4) jeweils eine transparente Außenlage (5, 10) und eine Siegellage (9, 11) aufweisen,
**dadurch gekennzeichnet,**
**dass** die Siegellage (9, 11) gegenüber der Außenlage (5, 10) eine größere Dicke aufweist; wobei die Siegellage aus Cast Polypropylen (CPP) ausgebildet ist und wobei das CPP um einen Faktor von mehr als 3 und weniger als 8, insbesondere von mehr als 4 und weniger als 7 verstreckt ausgebildet ist.

2. Stand Up Pouch nach Anspruch 1, **dadurch gekennzeichnet, dass** die Siegellage (9, 11) gegenüber der Außenlage (5, 10) um mehr als den Faktor 2,00, vorzugsweise mehr als der Faktor 2,25, insbesondere um mehr als den Faktor 2,50 dicker ausgebildet ist; und/oder dass die Siegellage (9, 11) gegenüber der Außenlage (5, 10) um weniger als den Faktor 6,50, vorzugsweise um weniger als den Faktor 6,25, insbesondere um weniger als den Faktor dicker 6,00 ausgebildet ist.

3. Stand Up Pouch nach einem der Ansprüche 1 bis 2, wobei die Siegellage (9,11) gegenüber der Außenlage (5, 10) um einen Faktor von 2 bis 4 oder um einen Faktor von 2,5 bis 3,5 dicker ausgebildet ist.

4. Stand Up Pouch nach einem der Ansprüche 1 bis 3, **dadurch gekennzeichnet, dass** die Vorderseite (2) und/oder die Rückseite (3) und/oder der Boden (4) mindestens eine Funktionslage (8) aufweist, die zwischen der Außenlage (5,10) und der Siegellage (9, 11) angeordnet ist, wobei die Funktionslage (8) eine Dicke von weniger als 25 µm, vorzugsweise von weniger als 20 µm, insbesondere von weniger als 15 µm aufweist und/oder von mehr als 6 µm, vorzugsweise von mehr als 9 µm, insbesondere von mehr als 12 µm aufweist.

5. Stand Up Pouch nach Anspruch 4, **dadurch gekennzeichnet, dass** die Funktionslage (8) eine Barriereschicht und/oder eine metallisierte Schicht und/oder eine Metallschicht und/oder mindestens eine BOPP-Schicht aufweist; und/oder
dass die Funktionslage (8) eine aufgedampfte Aluminiumschicht aufweist.

6. Stand Up Pouch nach einem der Ansprüche 1 bis 5, **dadurch gekennzeichnet, dass** die Außenlage (5) einen Druck (6) aufweist, der vorzugsweise im Umkehrdruck aufgebracht ist.

7. Stand Up Pouch nach einem der Ansprüche 1 bis 6, **dadurch gekennzeichnet, dass** der Stand Up Pouch (1) eine Sauerstoffdurchlassrate von weniger als 10 cm³/m² · Tag · bar, vorzugsweise von weniger als 5 cm³/m² · Tag · bar, insbesondere von weniger als 0,1 cm³/m² · Tag · bar aufweist, gemessen bei 23 °C und 0 % r. F; und/oder dass der Stand Up Pouch (1) eine Wasserdampfdurchlässigkeit von weniger als 10 g/m², vorzugsweise von weniger als 5 g/m², insbesondere von weniger als 0,1 g/m² in 24 h nach ASTM D6701-01 aufweist.

8. Stand Up Pouch nach einem der Ansprüche 1 bis 7, **dadurch gekennzeichnet, dass** die Vorderseite (2) und/oder die Rückseite (3) eine Dicke von weniger als 180 µm, vorzugsweise weniger als 160 µm, insbesondere weniger als 140 µm aufweist und/oder mehr als 80 µm, vorzugsweise mehr als 90 µm, insbesondere mehr als 100 µm aufweist.

9. Stand Up Pouch nach einem der Ansprüche 1 bis 8, **dadurch gekennzeichnet, dass** die Dicke der Vorderseite (2) und/oder die Dicke der Rückseite (3) um mehr als um den Faktor 1,1, vorzugsweise um mehr als den Faktor 1,2, insbesondere um mehr als den Faktor 1,3 größer als die Dicke des Bodens (4) ausgebildet ist und/oder um weniger als um den Faktor 2,0, vorzugsweise um weniger als den Faktor 1,8, insbesondere um weniger als den Faktor 1,6 größer als die Dicke des Bodens (4) ausgebildet ist; und/oder
wobei die Dicke der Vorderseite (2) und/oder die Dicke der Rückseite (3) um mehr als den Faktor 1,05 und um weniger als den Faktor 1,5 oder um mehr als den Faktor 1,05 und um weniger als den Faktor 1,3 größer als die Dicke des Bodens ausgebildet ist.

10. Stand Up Pouch nach einem der Ansprüche 1 bis 9, **dadurch gekennzeichnet, dass** die Außenlage (5, 10) aus BOPP ausgebildet ist, wobei das BOPP um mehr als den Faktor 2,0, vorzugsweise um mehr als den Faktor 3,0, insbesondere um mehr als den Faktor 4,0 verstreckt ausgebildet ist und/oder weniger als um den Faktor 7,0, vorzugsweise um weniger als den Faktor 6,5, insbesondere um weniger als den Faktor 6,0 verstreckt ausgebildet ist; und/oder
wobei die Außenlage aus BOPP ausgebildet ist und wobei das BOPP um einen Faktor von mehr als 1,1 und weniger als 2, insbesondere mehr als 1,2 und weniger als 1,8 verstreckt ausgebildet ist.

11. Stand Up Pouch nach einem der Ansprüche 1 bis 10, wobei die Vorderseite (2) und/oder die Rückseite (3) und/oder der Boden (4) mindestens eine Funktionslage (8) aufweist, die zwischen der Außenlage (5,10) und der Siegellage (9, 11) angeordnet ist, wobei die Funktionslage metallisiertes BOPP umfasst und wobei das metallisierte BOPP um einen Faktor von mehr als 1,1 und weniger als 2, insbesondere mehr als 1,2 und weniger als 1,8 verstreckt ausgebildet ist.

12. Stand Up Pouch nach einem der Ansprüche 1 bis 11, **dadurch gekennzeichnet, dass** die Siegellage (9, 11) aus einer mehrschichtigen Cast-Polypropylenlage gebildet ist; und/oder dass die Außenlage (5, 10) eine hitzebeständige Beschichtung aufweist.

13. Stand Up Pouch nach einem der Ansprüche 1 bis 12, **dadurch gekennzeichnet, dass** die Vorderseite (2) und/oder die Rückseite (3) und/oder der Boden (4) einen Schrumpf von weniger als 2,5 %, vorzugsweise von weniger als 2,0 %, insbesondere von weniger als 1,5 % aufweist.

14. Verfahren zur Herstellung eines Stand Up Pouch (1) mit folgenden Schritten:
- Extrudieren der Außenlage (5, 10) und der Siegellage (9, 11),
- Verkleben der Außenlage (5, 10) mit der Siegellage (9, 11),
- Verschweißen der Vorderseite (2) mit der Rückseite (3) und dem Boden (4) zu einem Stand Up Pouch (1),
**dadurch gekennzeichnet,**
**dass** die die Siegellage (9, 11) gegenüber der Außenlage (5, 10) mit einer größeren Dicke ausgebildet wird.

15. Verwendung eines Stand Up Pouch nach einem der Ansprüche 1 bis 13 als vollständig recycelfähige Getränkeeinwegverpackung für eine Heißabfüllung.
